# EUROPEAN PATENT APPLICATION

(11) **EP 4 064 687 A1**
(43) Date of publication of application: **28.09.2022**
(21) Application number: 20890667.7
(22) Date of filing: 04.11.2020
(51) Int. Cl.: H04N 5/76

(54) **METHOD AND APPARATUS FOR QUICKLY CONFIGURING CAMERAS, AND COMPUTER READABLE MEDIUM**

(30) Priority: 21.11.2019 CN 201911146012
(71) Applicant: ZTE Corporation, Shenzhen, Guangdong 518057 (CN)
(72) Inventor: FENG, Yuxiang, Shenzhen, Guangdong 518057 (CN)
(74) Representative: Petraz, Gilberto Luigi
(86) International application number: PCT/CN2020/126513
(87) International publication number: WO 2021/098512

(57) **Abstract**

Embodiments of the present application relate to the field of computer communications, and provide a method and apparatus for quickly configuring cameras, and a computer readable medium. The method comprises: determining a camera type according to a data packet obtained when configuring a camera; parameterizing a field to be configured in the data packet to obtain a parameterized field of the camera of the type; and configuring parameters for other cameras of the type in batches according to the parameterized field of the camera of the type.

## Description

### Cross-reference to Related Applications

The disclosure claims the priority of Chinese patent application CN201911146012.4, entitled "Method and Apparatus for Quickly Configuring Cameras, and Computer Readable Medium" and filed on November 21, 2019, the entirety of which is incorporated herein by reference.

### Field of the Invention

Embodiments of the disclosure relate to the field of computer communications, and in particular, to a method for quickly configuring cameras, an apparatus for quickly configuring cameras, and a computer readable medium.

### Background of the Invention

At present, when doing a project, since there are a great number of cameras and it is repetitive and very burdensome physical work to configure the cameras, it is necessary to provide a technique for quickly configuring cameras.

### Summary of the Invention

In order to solve the above problem, embodiments of the disclosure provide a method for quickly configuring cameras, an apparatus for quickly configuring cameras, and a computer readable medium, so that the cameras can be configured quickly.

An embodiment of the disclosure provides a method for quickly configuring cameras, which includes: determining a camera type according to a data packet obtained when configuring a camera; parameterizing a field to be configured in the data packet to obtain a parameterized field of the camera of the type; and configuring parameters for other cameras of the type in batches according to the parameterized field of the camera of the type.

An embodiment of the disclosure provides an apparatus for quickly configuring cameras, which includes: a type determining module, which is configured to determine a camera type according to a data packet obtained when configuring a camera; a parameterizing module, which is configured to parameterize a field to be configured in the data packet to obtain a parameterized field of the camera of the type; and a batch configuring module, which is configured to configure parameters for other cameras of the type in batches according to the parameterized field of the camera of the type.

An embodiment of the disclosure provides a device for quickly configuring cameras, which includes: a memory, a processor, and a computer program stored on the memory and is capable of running on the processor. The computer program, when executed by the processor, implements steps of the above method for quickly configuring cameras.

An embodiment of the disclosure provides a computer readable medium, on which a program for quickly configuring cameras is stored. The program for quickly configuring the cameras, when executed by a processor, implements steps of the above method for quickly configuring cameras.

### Brief Description of the Drawings

Fig. 1 is a schematic flowchart of a method for quickly configuring cameras provided according to an embodiment of the disclosure;
Fig. 2 is a detailed flowchart of configuring cameras provided according to an embodiment of the disclosure;
Fig. 3 is a schematic flowchart of parsing an obtained data packet by a system provided according to an embodiment of the disclosure;
Fig. 4 is a module architecture connection diagram of a system for quickly configuring cameras provided according to an embodiment of the disclosure;
Fig. 5 is a structural block diagram of an apparatus for quickly configuring cameras provided according to an embodiment of the disclosure; and
Fig. 6 is a structural block diagram of a device for quickly configuring cameras provided according to an embodiment of the disclosure.

### Detailed Description of the Embodiments

Embodiments of the disclosure are described in detail below with reference to accompanying drawings. It should be understood that, the embodiments described below are only for illustrating and explaining the disclosure, rather than limiting the disclosure.

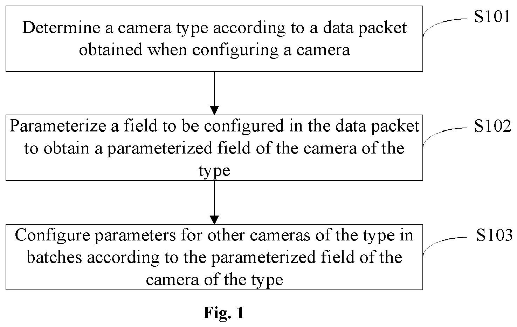

Fig. 1 is a schematic flowchart of a method for quickly configuring cameras provided according to an embodiment of the disclosure. As shown in Fig. 1, the method may include the following steps.

At step S101, a camera type is determined according to a data packet obtained when configuring a camera.

Before configuring multiple cameras, a camera type is determined according to a data packet obtained when configuring (for example, manually) a camera (for example, any camera of the multiple cameras).

This step may include: extracting at least one of version information, type information, and company information from the data packet, and determining the camera type according to the at least one of the version information, the type information, and the company information; or extracting image data information from the data packet, and determining the camera type according to the image data information.

It should be noted that, before configuring (for example, manually) the camera (for example, any camera of the multiple cameras), a recording function may be activated, and a data packet interacted between a client and a server located at the camera in a process of configuring (for example, manually) the camera (for example, any camera of the multiple cameras) is acquired by means of the recording function.

At step S102, a field to be configured in the data packet is parameterized to obtain a parameterized field of the camera of the type.

This step may include: extracting key fields from the data packet; selecting a field to be configured from the key fields; and parameterizing the field to be configured, to obtain a parameterized field of the camera of the type. Herein, the parameterized field of the camera of the type is used to configure parameter data of the camera of the type in batches.

In an embodiment, extracting key fields from the data packet includes: searching in a local database for a parameterization configuring strategy (or configuring strategy or parameterization scheme) corresponding to the camera type; if the parameterization configuring strategy is found, the key fields are extracted from the data packet according to the parameterization configuring strategy; and if no parameterization configuring strategy is found, key fields are extracted from the data packet according to common key fields for configuring a camera.

In an embodiment, some of key fields may be selected, from extracted key fields, to be used as fields to be configured, or all of the extracted key fields may be used as the fields to be configured. When some of the key fields are selected to be used as the fields to be configured, all of the extracted key fields may be displayed on an interface for a user to designate, and fields designated among the key fields are used as the fields to be configured. Alternatively, some of the key fields may be selected automatically, from all of the extracted key fields, to be used as the fields to be configured according to configuring needs.

It should be noted that, the parameterization configuring strategy in the local database includes the camera type and the corresponding parameterized field. The parameterization configuring strategy may be download from a server, or may be generated locally. If the parameterization configuring strategy is generated locally, the parameterization configuring strategy may be uploaded to the server.

At step S103, parameters for other cameras of the type are configured in batches according to the parameterized field of the camera of the type.

When other cameras are configured, parameters for other cameras of the type are configured in batches according to the parameterized field of the camera of the type.

This step may include: acquiring a set of new configuring data for a current camera to be configured; using the set of new configuring data to replace a set of data of the parameterized field in the data packet for configuring the current camera at one time, so as to configure parameter data of the current camera in batches; and sending the data packet on which data replacement has been performed to the current camera, so as to complete configuring of the current camera. After the configuring of the current camera is completed, the above step is repeated, until configuring of all other cameras of the type is completed.

In an embodiment, a set of new configuring data for the current camera is acquired when it is detected that a corresponding port of the current camera is opened.

It should be noted that, the set of new configuring data may be generated in advance by the engineer. In order to achieve one-time replacement for data of multiple parameters, the set of new configuring data may be saved as a row of data. When replacement is required, a data configuring block corresponding to parameterized fields to be configured is popped up according to the parameterized fields to be configured in the data packet, and the parameterized fields to be configured in the data configuring block are arranged in row. In this way, by dragging, data of the parameterized fields arranged in row may be directly replaced with the row of data generated in advance and saved, so as to achieve configuring of a great amount of data in batches at one time, which greatly reduces the workload of configuring cameras by the engineer.

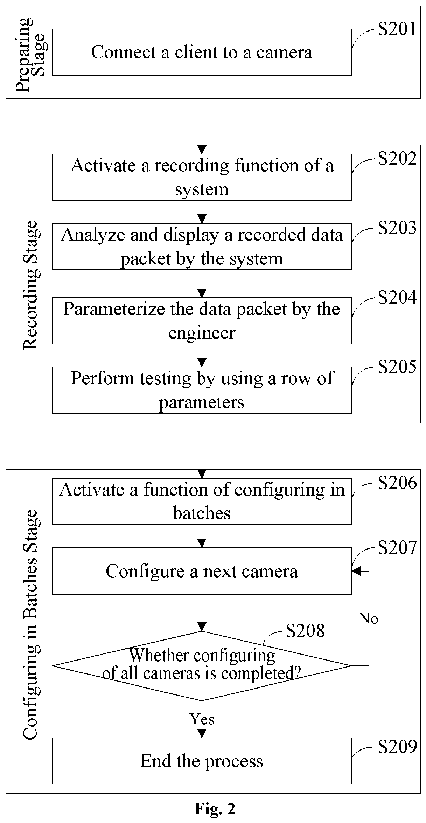

Current cameras have the same configuration when leaving the factory. For example, the cameras are configured with the same IP address. For this circumstance, implementation steps may be as follows, as shown in Fig. 2.

### I. Preparing Stage

At step S201, a client is connected to a camera.

The engineer accesses a system, and uses a built-in tool of the system to connect with a configuring interface (the HTTP protocol or the SSH protocol, and the like) of the camera. The engineer performs normal configuring operations and ends the process.

### II. Recording Stage

At step S202, a recording function of the system is activated.

The system activates the recording function in a configuring process.

At step S203, the system analyzes and displays a recorded data packet.

The system acquires a packet between the client and the camera in the configuring process.

After the packet is captured, the system analyzes the data packet. A camera type is determined by extracting key fields (such as version information, type information, company information and the like) in an interaction data packet. The camera type may also be determined by parsing key data (for example, if the camera is configured in the manner of HTTP, image data information in a response may be analyzed). A standard for making a determination is to search in a local database for a match.

At step S204, the engineer parameterizes the data packet.

According to an obtained camera type, searching is performed in the local database for a match. According to a matching result, key fields in an interaction process are extracted and displayed on an interface to the user, and the user may select a special field (username, password, port, IP, and the like) for performing parameterization.

If the camera type is not found, the system extracts key fields (for example, "username" is often used for the username, "password" is often used for the password, and the like) in the interaction process and displays the key fields on the interface to the user. The user may select a special field recommended by the system for performing parameterization, or may select other fields for performing parameterization.

After the user completes the parameterization, saving is performed. The system saves a current parameterization scheme to the local database.

At step S205, testing is performed by using a certain row of parameters.

After the parameterization is completed, the system extracts the latest row of data to replace parameters in the data packet, and the data packet is sent to a server of the camera. After sending is completed, a response sent from the server is received. Meanwhile, the system analyzes whether the response has an anticipated field that is consistent with the field in the data packet (generally, whether type of the response is 200 OK is checked).

When the system is connected to a public network, a local newly added parameterization scheme may be uploaded to the server. Besides, if the system finds a new parameterization scheme, the new parameterization scheme may also be synchronized locally.

### III. Configuring in Batches Stage

At step S206, a function of configuring in batches is activated.

At step S207, a next camera is configured.

At step S208, determining whether configuring of all cameras is completed may be performed. If yes, step S209 is performed, and if no, step S207 is performed.

At step S209, the process is ended.

In the embodiment of the disclosure, data in an interaction data packet of a client and a camera when the camera is configured is captured, and parameter data is sent in batches, so as to quickly configure cameras.

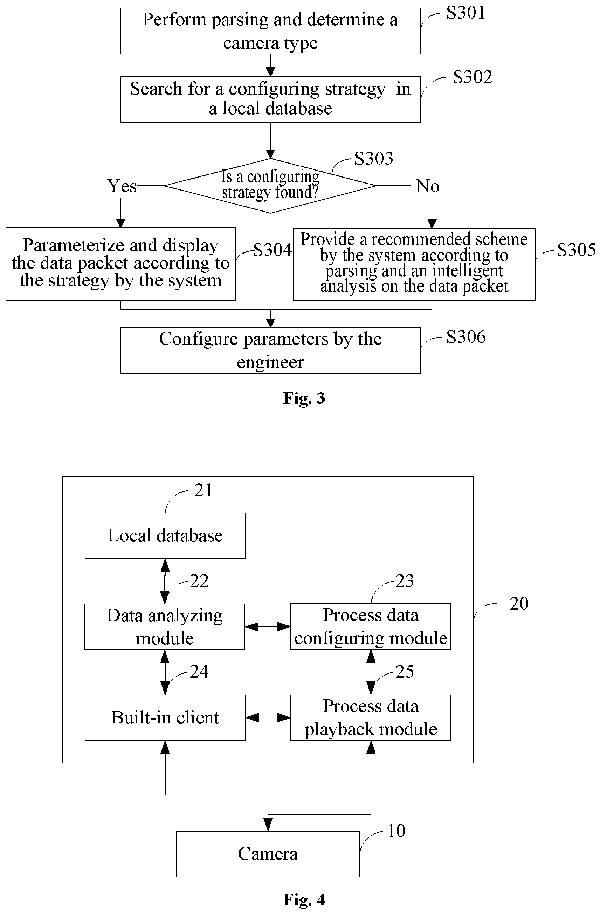

Fig. 3 is a schematic flowchart of parsing an obtained data packet by a system provided according to an embodiment of the disclosure. As shown in Fig. 3, the following steps may be included.

At step S301, a data packet is parsed, and a camera type is determined.

At step S302, a configuring strategy corresponding to the camera type is searched for in a local database.

At step S303, determining whether a configuring strategy is found may be performed. If yes, step S304 is performed, and if no, step S305 is performed.

At step S304, the system parameterizes and displays the data packet according to the configuring strategy.

At step S305, the system parses the data packet, performs an intelligent analysis, and provides a recommended parameterization scheme.

At step S306, the engineer configures parameters.

Fig. 4 is a module architecture connection diagram of a system for quickly configuring cameras provided according to an embodiment of the disclosure. As shown in Fig. 4, the system may include:
a camera 10, which is a camera to be configured; and
a quick configuring device 20, which includes:
   the built-in client 20 may include:
a local database 21, which is a database locally storing data packet parsing strategies and schemes;
a network data analyzing module (or referred to as data analyzing module) 22, which is a module for analyzing a data packet and parsing out a position of a parameterized field;
a process data configuring module 23, which is a module for displaying details of the data packet to a user via an interface so as to enable the user to configure parameter data;
a built-in client 24, which runs client software which is built in the system and may access the camera for configuring, and may be connected to the camera via two manners, i.e., wired connection and wireless connection; and
a process data playback module 25, which is a module for playing back extracted network input and output data according to parameter information configured by the user, the playback including sending the data packet and comparing a received response with an anticipated result.

A process of configuring cameras by the system is as follows.

At step one, the engineer arranges a configuration environment of cameras, including configuring IPs and connecting with the cameras, and turns on a client (a built-in webpage browser or an SSH client) for configuring the cameras in the system. Then, the engineer performs operations normally on a client machine to configure one camera. Thereafter, a recording function is stopped.

At step two, the system analyzes a recorded data packet and searches a local database for a parameterization scheme based on an analysis result. If the parameterization scheme is found, the parameterization scheme is invoked directly. If no parameterization scheme is found, an intelligent analysis is performed to recommend a field for performing parsing and parameterizing.

At step three, the system displays parameters (IP, port, username, and password of the camera, and other parameter information of the camera) required modifications on an interface.

At step four, the engineer configures a list of data parameters with respect to these parameters required modifications recommended by the system. Alternatively, the engineer parameterizes configuring data manually. When configuring data is performed, the system will pop out a data configuring block, and a great amount of data may be configured in batches at one time by dragging data which is similar to a manner used in Excel.

At step five, the engineer selects a certain row of parameters and invokes an execution function. The system sends a data packet to the camera, and parses a received response. After execution is completed, the engineer may examine whether configuring is correct. After testing of a single row is successful, the engineer may activate a function of configuring in batches.

At step six, after configuring is completed, the system may perform playback. During the playback, the camera is first connected to a computer on which the system runs via a direct connecting line. The system pauses each time when one row of data is executed, and then the engineer may connect the computer to a new camera. After that, the engineer may click a "continue" button, and the system executes a next row of data. The execution is repeated in this way until configuring of all cameras is completed.

It should be noted that, a connection manner between the system and the camera may be optimized. At this time, a process of configuring cameras of the system may be as follows.

At step one, when a camera leaves the factory, the camera is initialized and configured to have a DHCP function. After the camera is turned on, a predetermined username and a predetermined password are used to connect the camera to a WIFI network having a fixed name, so that the camera may access the network wirelessly. The engineer arranges a configuration environment of cameras, including configuring IPs and connecting with the network shared by the cameras, and turns on a client (a built-in webpage browser or an SSH client) for configuring the cameras in the system. Then, the engineer performs operations normally on a client machine to configure the camera. After that, a recording function is stopped.

Subsequent steps are the same as step two to step five in the above process of configuring cameras, and are not repeated herein.

At step six, after configuring is completed, the system may perform playback. Before performing the playback and configuring in batches, the cameras are first turned on and connected to the WIFI network. The computer on which the system runs is also connected to the same WIFI network. The system first scans multiple IPs in a network segment, and meanwhile detects whether a designated port (if the HTTP protocol is used, the port is a web server listener port) is opened. If the port is opened, a row of data is read automatically for performing configuring. If the configuring fails, a next IP is scanned. If the configuring succeeds, a next row of data is read, and a next IP is scanned. The execution is repeated in this way until configuring of all cameras is completed.

The cameras have the same configuration when leaving the factory, but they are required to be configured manually to have different settings. Parameters to be set, for example, IP, port, username, password, and the like, are all regular. Based on these features, in this embodiment, the system sends data packets in batches for performing configuring so as to quickly configure the cameras, which greatly reduces the workload of configuring cameras in a project implementation phase.

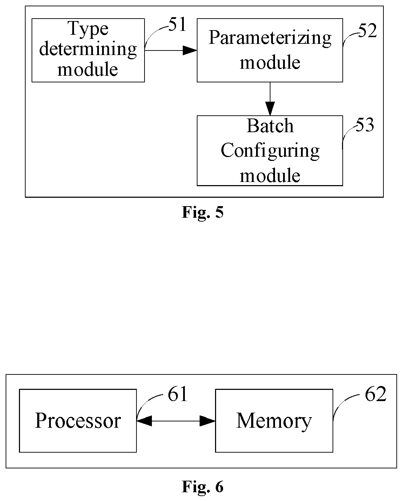

Fig. 5 is a structural block diagram of an apparatus for quickly configuring cameras provided according to an embodiment of the disclosure. As shown in Fig. 5, the apparatus may include a type determining module 51 (which may realize an analyzing function of the network data analyzing module 22), a parameterizing module 52 (which may realize displaying and configuring functions of a process data configuring module 23), and a batch configuring module 53 (which may realize a data packet sending function of the process data playback module 25). Herein, the type determining module 51 is configured to determine a camera type according to a data packet obtained when configuring a camera; the parameterizing module 52 is configured to parameterize a field to be configured in the data packet to obtain a parameterized field of the camera of the type; and the batch configuring module 53 is configured to configure parameters for other cameras of the type in batches according to the parameterized field of the camera of the type.

Before configuring multiple cameras, the type determining module 51 determines the camera type according to the data packet obtained when configuring (for example, manually) a camera (for example, any camera of the multiple cameras). In an embodiment, the type determining module 51 extracts at least one of version information, type information, and company information from the data packet, and determines the camera type according to the at least one of the version information, the type information, and the company information; or the type determining module 51 extracts image data information from the data packet, and determine the camera type according to the image data information.

It should be noted that, before configuring (for example, manually) the camera (for example, any camera of the multiple cameras), a recording function may be activated, and a data packet interacted between a client and a server located at the camera in a process of configuring (for example, manually) the camera (for example, any camera of the multiple cameras) is acquired by means of the recording function.

The parameterizing module 52 is specifically configured to extract key fields from the data packet, select a field to be configured from the key fields, and parameterize the field to be configured, so as to obtain a parameterized field of the camera of the type. Herein, the parameterized field of the camera of the type is used to configure parameter data of the camera of the type in batches. In an embodiment, the parameterizing module 52 extracting key fields from the data packet is specifically as follows. A parameterization configuring strategy (or configuring strategy or parameterization scheme) corresponding to the camera type is searched for in a local database. If the parameterization configuring strategy is found, the key fields are extracted from the data packet according to the parameterization configuring strategy. If no parameterization configuring strategy is found, key fields are extracted from the data packet according to common key fields for configuring a camera. In an embodiment, some of key fields may be selected, from extracted key fields, to be used as fields to be configured, or all of the extracted key fields may be used as the fields to be configured. When some of the key fields are selected to be used as the fields to be configured, all of the extracted key fields may be displayed on an interface for a user to designate, and fields designated among the key fields are used as the fields to be configured. Alternatively, some of the key fields may be selected automatically, from all of the extracted key fields, to be used as the fields to be configured according to configuring needs.

It should be noted that, the parameterization configuring strategy in the local database includes the camera type and the corresponding parameterized field. The parameterization configuring strategy may be download from a server, or may be generated locally. If the parameterization configuring strategy is generated locally, the parameterization configuring strategy may be uploaded to the server.

The batch configuring module 53 is specifically configured to configure parameters for other cameras of the type are in batches according to the parameterized field of the camera of the type. In an embodiment, the batch configuring module 53 acquires a set of new configuring data for a current camera to be configured; the batch configuring module 53 uses the set of new configuring data to replace a set of data of the parameterized field in the data packet for configuring the current camera at one time, so as to configure parameter data of the current camera in batches; and the batch configuring module 53 sends the data packet on which data replacement has been performed to the current camera, so as to complete configuring of the current camera. After the configuring of the current camera, the above step is repeated, until configuring of all other cameras of the type is completed. Herein, when it is detected that a corresponding port of the current camera is opened, the batch configuring module 53 acquires a set of new configuring data for the current camera.

It should be noted that, the set of new configuring data may be generated in advance by the engineer. In order to achieve one-time replacement for data of multiple parameters, the set of new configuring data may be saved as a row of data. When replacement is required, a data configuring block corresponding to parameterized fields to be configured is popped up according to the parameterized fields to be configured in the data packet, and the parameterized fields to be configured in the data configuring block are arranged in row. In this way, by dragging, data of the parameterized fields arranged in row may be directly replaced with the row of data generated in advance and saved, so as to achieve configuring of a great amount of data in batches at one time, which greatly reduces the workload of configuring cameras by the engineer.

In the embodiment of the disclosure, interaction data when the camera is configured is captured, and parameter data is modified in batches, so as to realize a system of quickly configuring cameras.

An embodiment of the disclosure further provides a device for quickly configuring cameras. As shown in Fig. 6, the device may include a memory 62, a processor 61, and a computer program stored on the memory 62 and is capable of running on the processor 62. The computer program, when executed by the processor 61, implements steps of the above method for quickly configuring cameras. The memory 62 may be an RAM, an ROM, and EEPROM, a flash memory, and the like. The processor 61 may be a central processor, a digital signal processor, or a microprocessor, and the like.

Compared with the existing technologies, the technical solution provided by the embodiment of the disclosure include: determining a camera type according to a data packet obtained when configuring a camera; parameterizing a field to be configured in the data packet to obtain a parameterized field of the camera of the type; and configuring parameters for other cameras of the type in batches according to the parameterized field of the camera of the type. In the embodiment of the disclosure, parameter data of cameras are configured in batches, so as to quickly configure the cameras.

An embodiment of the disclosure provides a computer readable medium, on which a program for quickly configuring cameras is stored. The program for quickly configuring the cameras, when executed by a processor, implements steps of the above method for quickly configuring cameras. A person of ordinary skills in the art may understand that, all or some steps of the method disclosed above and functional modules/units of a system or an apparatus may be implemented as software, firmware, hardware, and a proper combination thereof. In an embodiment of the hardware, a division of the functional modules/units mentioned in the above description does not necessarily correspond to a division of physical components. For example, one physical component may have multiple functions, or one function or step may be implemented by multiple physical components cooperatively. Some physical components or all physical components may be implemented as software executed by a processor, such as a central processor, a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communication medium (or transient medium). As is known to a person of ordinary skills in the art, the term of computer storage medium includes volatile and non-volatile, removable and non-removable mediums that may be implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage apparatus, or any other medium which can be used to store the desired information and can be accessed by a computer. Besides, it is well known to those skilled in the art that the communication medium typically includes a computer readable instruction, a data structure, a program module, or other data in a modulated data signal, such as a carrier wave or other transport mechanisms, and may include any information delivery medium.

Although the disclosure is described in detail hereinabove, the disclosure is not limited to this, and those skilled in the art can make various changes according to the principle of the disclosure. Therefore, modifications made according to the principle of the disclosure shall all be understood as falling into the protection scope of the disclosure.

## Claims

1. A method for quickly configuring cameras, wherein, the method comprises:
determining a camera type according to a data packet obtained when configuring a camera;
parameterizing a field to be configured in the data packet to obtain a parameterized field of the camera of the type; and
configuring parameters for other cameras of the type in batches according to the parameterized field of the camera of the type.

2. The method according to claim 1, wherein determining the camera type according to the data packet obtained when configuring the camera comprises:
determining the camera type according to at least one of version information, type information, and company information in the data packet; or
determining the camera type according to image data information in the data packet.

3. The method according to claim 1, wherein parameterizing the field to be configured in the data packet to obtain the parameterized field of the camera of the type comprises:
extracting key fields from the data packet;
selecting a field to be configured from the key fields; and
parameterizing the field to be configured so as to obtain a parameterized field of the camera of the type.

4. The method according to claim 3, wherein extracting the key fields from the data packet comprises:
searching in a local database for a parameterization configuring strategy corresponding to the camera type, and extracting, if the parameterization configuring strategy is found, the key fields from the data packet according to the parameterization configuring strategy.

5. The method according to claim 4, wherein extracting the key fields from the data packet further comprises:
extracting, if no parameterization configuring strategy is found, the key fields from the data packet according to common key fields for configuring a camera.

6. The method according to claim 3, wherein configuring the parameters for other cameras of the type in batches according to the parameterized field of the camera of the type comprises:
acquiring a set of new configuring data for a current camera to be configured;
using the set of new configuring data to replace a set of data of the parameterized field in the data packet for configuring the current camera at one time; and
sending the data packet on which data replacement has been performed to the current camera.

7. The method according to claim 6, wherein acquiring the set of new configuring data for the current camera to be configured comprises:
acquiring a set of new configuring data for the current camera when it is detected that a corresponding port of the current camera is opened.

8. An apparatus for quickly configuring cameras, wherein the apparatus comprises:
a type determining module, which is configured to determine a camera type according to a data packet obtained when configuring a camera;
a parameterizing module, which is configured to parameterize a field to be configured in the data packet to obtain a parameterized field of the camera of the type; and
a batch configuring module, which is configured to configure parameters for other cameras of the type in batches according to the parameterized field of the camera of the type.

9. A device for quickly configuring cameras, which comprises a memory, a processor, and a computer program stored on the memory and is capable of running on the processor, wherein the computer program, when executed by the processor, implements steps of the above method for quickly configuring cameras.

10. A computer readable medium, wherein a program for quickly configuring cameras is stored thereon, and the program for quickly configuring the cameras, when executed by a processor, implements steps of the above method for quickly configuring cameras according to any of claims 1 to 7.
